# EUROPEAN PATENT SPECIFICATION

(11) **EP 2 211 641 B1**
(45) Date of publication and mention of the grant of the patent: **23.10.2013**
(21) Application number: 08854653.6
(22) Date of filing: 23.10.2008
(51) Int. Cl.: A23L 1/40, A23L 1/304

(54) **FORTIFIED BOUILLON CUBE**
VERSTÄRKTER BRÜHWÜRFEL
BOUILLON CUBE FORTIFIÉ

(30) Priority: 27.11.2007 EP 07121606
(43) Date of publication of application: 04.08.2010
(73) Proprietor: Unilever N.V., 3013 AL Rotterdam (NL); Unilever PLC, London EC4Y 0DY (GB)
(72) Inventor: SMORENBURG, Hermanus Ebertus, 3133 AT VLAARDINGEN, (NL); YAMSON, Theresa, Ayitsoo, 4051 Durban (ZA)
(74) Representative: Reijns, Tiemen Geert Pieter
(86) International application number: PCT/EP2008/064381
(87) International publication number: WO 2009/068378

(56) References cited:
- WO-A-95/22908
- WO-A-2005/051105
- WO-A-2006/063690
- WO-A-2007/107501
- WO-A1-2004/049831
- WO-A1-2006/024464
- WO-A1-2007/068332
- WO-A1-2008/055537
- GB-A- 2 380 656
- Allen, L.; de Benoist, B.; Dary, O.; Hurrell, R.: "Guidelines on food fortification with micronutrients", 2006, World Heath Organisation; Food and Agricultural Organization of the United Nations pages 105-105,
- "Dietary Reference Intakes for Vitamin A, Vitamin K, Arsenic, Boron, Chromium, Copper, Iodine, Iron, Manganese, Molybdenum, Nickel, Silicon, Vanadium and Zinc", 2001, Institute of Medicine pages 316-350,
- DATABASE WPI Week 200508, Derwent Publications Ltd., London, GB; AN 2005-071823 & KR 2004 0 077 610 A (KIM K O) 04 September 2004
- DATABASE WPI Week 200369, Derwent Publications Ltd., London, GB; AN 2003-725144 & JP 2003 169644 A (HOUSE FOODS CORP) 17 June 2003
- 'Wikipedia: Bouillon Cube', [Online] Retrieved from the Internet: <URL:http://en.wikipedia.org/wiki/Bouillon_ cube> [retrieved on 2012-11-06]

## Description

The present invention relates to a bouillon cube and a process to prepare the same and a ready-to-eat food composition comprising said bouillon cube.

### Background of the invention

Bouillon cubes comprising a concentrated bouillon are used around the world as basic cooking ingredient. The use of a bouillon cube may be more common in developing areas than in Western countries, as bouillon cubes are relatively cheap ingredients.

Especially in developing areas, iron is an element which may be not abundantly present in the regular diet. This may be due to the fact that meat and/or diary products, which are considered important sources of iron for the diet, are consumed in a less amount compared to wealthier parts of the world. However, also in wealthier countries, people may voluntary choose for a diet which may cause a reduced iron intake, such as a vegetarian diet. The risk for a deficiency in iron may therefore be serious for a significant part of the population.

To provide an alternative source for iron, next to meat products, iron may be added as a supplement to food products, generally referred to as "iron-fortification". Because bouillon cubes may be widely consumed in areas with a population with an increased risk for iron-deficiency, the use of bouillon cubes as a carrier for iron may be a preferred choice. Fortification of a bouillon cube, however, entails several challenges to meet.

WO 2006/063690 describes a process for making bouillon cubes or seasoning cubes free of trans unsaturated fatty acids. The process comprises mixing powdered fat with the particulate ingredients by pressing. The application discloses a bouillon cube comprising salt, monosodium glutamate and corn starch.
Allen, L. et al. "Guidelines on food fortification with micronutrients", 2006, World Health Organisation; Food and Agricultural Organisation of the United nations, page 105 discloses suggested iron fortificants for specific food vehicles.

A relatively large group of iron compounds is used in the art for fortification purposes. A problem observed by the inventors when these conventional iron compounds would be applied for fortification of bouillon cubes is the appearance of an off-colour in the resulting food product. For example, a bouillon which results from dissolving a cube fortified with a conventional iron compound may show e.g. darker in colour. It may be conceived that such a darkening in colour of a resulting food product may be experienced as unappealing to a consumer.

A solution conventionally used to mask an unappealing off-colour may be addition of a colourant, such as e.g. caramel. However, caramel results in severe darkening of the food products resulting from the bouillon cube and may be undesired when a food product with a light colour is desired, e.g. chicken bouillon or fish bouillon. Moreover, such a colourant, such as e.g. caramel, may not be desired e.g. for reasons of taste. Caramel may provide a sweet taste, and specific coloured spice powders may provide their inherent spice taste.

Therefore, the aim of the present invention is to provide an iron-fortified bouillon cube, which bouillon cube after dissolving results in a food product with an acceptable appearance, preferably, wherein an off-colour resulting from the added iron is less than an off-colour observed when conventional iron compounds are used. More preferably, the food product resulting from the bouillon cube does not show an off-colour that needs to be compensated for. Most preferably, the food product resulting from the bouillon cube has an appearance similar to food products resulting from a non-iron-fortified bouillon cube.

### Summary of the invention

To meet at least part of the problems mentioned above, the present invention relates to a bouillon cube comprising, based on the weight of the bouillon cube:
- at least 30%wt. and less than 70 %wt. of NaCl,
- at least 10%wt. and less than 45 %wt. of monosodium glutamate,
   characterised in that said bouillon cube further comprises at least one iron compound of the group of
- ferric sodium EDTA,
- reduced iron,
- ferrous lactate,
- ferric citrate,
- ferric pyrophosphate,
- ferrous sulphate monohydrate,
- ferric ammonium citrate brown,
in such an amount that the bouillon cube comprises an amount of Fe²⁺ and/or Fe³⁺ taken together of from at least 0.01 %wt. and less than 2.1 %wt, preferably from at least 0.025 %wt and less than 1.6 %wt, more preferably, from at least 0.05 %wt and less than 1 %wt, based on the weight of the bouillon cube.

### Detailed description of the invention

Unless specified otherwise, in the course of the present specification, all percentages are percentages by weight, and are based on the weight of the bouillon cube.
EDTA means ethylenediamine tetraacetic acid.

"Iron" means Fe²⁺ and/or Fe³⁺ ions.

According to the present invention, the solid bouillon cube comprises iron. Iron is present in a food-grade complex in the form of ferric sodium EDTA, reduced iron, ferrous lactate, ferric citrate, ferric pyrophosphate, ferrous sulphate monohydrate or ferric ammonium citrate brown. The amount of iron compound necessary to provide the above mentioned amount of iron may differ per iron compound used. Therefore, the required respective amounts of iron compound may be easily calculated by the skilled person, using the relative amounts of iron in the respective iron compounds. These relative amounts are: FeNaEDTA (13% Fe), Fe(ii) sulphate monohydrate CD 65%, Reduced Iron (100%), Fe(iii) ammonium citrate brown (21%), Fe (iii) citrate (17%), Fe(iii) lactate 3 hydrate (97%), Fe(iii) pyrophoshate (25%).

The bouillon cube according to the present invention comprises at least one of the iron compounds mentioned in the summary of the invention. A mixture of the iron compounds may also be present. Hence, the present invention further relates to a bouillon cube of the present invention, comprising at least 4, preferably at least 3, more preferably at least 2 of the iron compounds.

The bouillon cube according to the invention comprises from at least 30 %wt. to less than 70 %wt. salt, preferably, at least 40 %wt. and less than 60 %wt., more preferably, at least 45 %wt. and less than 55 %wt. In the present context, salt may preferably comprise NaCl. In addition, however, other food grade salts and/or salt replacers may be present, such as e.g. KCl or NH₄Cl.

The concentrated food composition according to the present invention further comprises monosodium glutamate in an amount of at least 10 %wt. and less than 45 %wt., preferably from at least 20 %wt. and less than 35 %wt., more preferably, from at least 25 %wt. and less than 30 %wt.

The bouillon cube according to the invention, preferably further comprises starch in an preferred amount of from at least 2 %wt. and less than 20 %wt., preferably from at least 2 %wt. and less than 15 %wt., more preferably at least 5 %wt. and less than 12 %wt., most preferably, at least 7 %wt. and less than 10 %wt. Starch may be present in the form of modified starch or native starch. Maltodextrin may also be present as an example of modified, hydrolysed, starch. Starch may be preferably potato starch or corn starch. As a source of starch, or instead of starch, preferably flour may be used in the bouillon cube according to the invention.

The bouillon cube according to the invention may further comprise a binding agent. Suitable binding agents are water, glycerol or fat. Preferably, the binding agent is fat. The content of binding agent, may depend on the composition that is formulated. For example, pressed bouillon cubes may have a lower content of binding agent than bouillon cubes which are produced using extrusion and which have a more pasty appearance. When the binding agent is fat, the fat in the bouillon cube according to the invention may be any fat which is food grade and may be used in a bouillon composition composition, especially in a bouillon cube. In the present specification, fat may comprise both solid fat and liquid fat, including oil. The fat may for example comprise animal fat, such as fat from pork, chicken or beef, but also vegetable fat, such as olive oil, palm oil or rape seed oil may be used. A combination of fats is also possible. The fat preferably comprises triglycerides.

When fat is used as a binding agent, the fat content in the bouillon cube may vary, depending on the desired appearance of the bouillon cube, in particular of a bouillon cube, and ranges between 7 and 30 %wt. fat. Preferably, the fat content is at least 10 %wt. and less than 25 %wt., more preferably at least 15 %wt. and less than 20 wt.%. When a relatively hard solid bouillon cube is desired, less fat may be used, such as e.g. a fat content of at least 7 %wt. and less than 15 %wt. This type of bouillon cubes is suitably produced using pressing or tabletting devices. Pressing is carried out by a process as known in the art, using for example a apparatus from Bonals^{™} or Kilian^{™}. Pasty-like bouillon cubes may require a higher fat content, such as e.g. a fat content of from at least 15 %wt. to less than 30 %wt., preferably at from at least 17 %wt. and less than 25%wt., more preferably form at least 20 and less than 22 %wt. Pasty-like bouillon cubes may preferably be produced using extrusion. Besides pressing or extrusion, the shaping of the bouillon cube may be carried out by other techniques such as e.g. cutting, sheeting or roller compaction.

As mentioned, it was observed by the inventors that several iron compounds that may be suitable for iron fortification may give an undesired, unappealing, colouring effect to the food product resulting from the bouillon cube, for example a bouillon. Surprisingly, it was found that when using an iron compound from the group of ferric sodium EDTA, reduced iron, ferrous lactate, ferric citrate, ferric pyrophosphate, ferrous sulphate monohydrate, ferric ammonium citrate brown, the colouring effect of the resulting food product (e.g. a bouillon) was reduced or even not detected compared to other iron compounds used for fortification (see examples) in a comparable amount. Especially the group of ferric sodium EDTA, reduced iron, ferrous lactate, ferric citrate, ferric pyrophosphate, ferric ammonium citrate brown was preferred. For this preferred group the taste of bouillon was still good or at least in the acceptable area. Even after prolonged storage of the bouillon cubes, the taste appeared to be stable (see Example 1) and bouillon taste had not, or hardly, been diminished as a consequence of the fortification.

Therefore, preferably the invention relates to a bouillon cube according to the invention, comprising at least one of ferric sodium EDTA, reduced iron, ferrous lactate, ferric citrate, ferric pyrophosphate, ferric ammonium citrate brown.

Even more preferably, the invention relates to a bouillon cube comprising ferric sodium EDTA, ferric citrate or ferric pyrophosphate. This group of iron compounds gave the best results with regard to absence of colouring of the resulting food composition.

An especially preferred iron compound according to the invention was ferric sodium EDTA. Application of ferric sodium EDTA showed several advantages. When ferric sodium EDTA was used for fortification of a bouillon cube, the colouring effect in the food product resulting from the bouillon cube was not observed or at least very limited compared to a control food product resulting from a bouillon cube without any added iron compound. This is the more surprising, as it is known in the field of food fortification that ferric sodium EDTA may provide an off colour to foods. Additionally, when ferric sodium EDTA was used, the taste was best preserved compared to the other fortificants and did not diminish by the fortification, moreover, the taste appeared to be most stable over time. A further surprising effect relevant in the field of bouillon production was that the food product (bouillon) resulting from a bouillon cube comprising ferric sodium EDTA, had a more intense flavour of beef. For reasons not entirely clear, other iron compounds seem to reduce the intensity of the beef flavour, which was not observed when ferric sodium EDTA was used.

Therefore, preferably, the iron compound used in the bouillon cube according to the invention is ferric sodium EDTA.

The bouillon cube according to the invention preferably comprises from at least 0.1 %wt. and less than 20 %wt. of ferric sodium EDTA. Preferably, the amount of ferric sodium EDTA is from at least 0.25 %wt. and less than 16 %wt, more preferably, from at least 0.5 %wt and less than 6.5 %wt, as based on the weight of the bouillon cube.

Although Na-FeEDTA has been mentioned as the preferred iron compound, another Fe-EDTA compound, such as e.g. K-FeEDTA may be used as well. This may be desired e.g. when a lower sodium content is desired.

In addition to the ingredients mentioned above, the bouillon cube according to the invention may further comprise herbs and spices. Examples are e.g. parsley, oregano, garlic powder, onion powder, paprika, white pepper, curry. Herbs and spices may be present in an amount of at least 2 and less than 30 %wt., preferably at least 5 %wt. and less than 25 %wt., more preferably, at least 10 %wt. and less than 20 %wt., based on the weight of the bouillon cube.

In a preferred embodiment, the invention relates to a bouillon cube, wherein the bouillon cube is dry. In the present context, dry is intended to mean having a water activity of lower than 0.65, preferably the water activity is between 0.3 and 0.5. The water content preferably is lower than 5 %wt., preferably the water content is between 2 and 4 %wt. The bouillon cube may preferably be in the form of a jelly for e.g. reasons of a 'fresh' appearance. In this case, the water activity may be in the range of from e.g. 0.4 to 0.8 and the water content may be in the range of e.g. 20 to 80%wt.

The present invention relates to a bouillon cube. Cubes according to the present invention may therefore be pressed (e.g. pressed/hard cubes) or extruded (e.g. pasty cubes). As mentioned, cube with the texture of a gel may also be possible.

The bouillon cube according to the present invention may have several shapes. "Cube" is not limited to a shape in a typical cube form, but is intended to comprise any shape of the bouillon cube, such as e.g. a tablet, a ball, a pyramid or a pillow shape. Preferably, the present invention relates to a bouillon cube in the form of a cube or a tablet.

The bouillon cubes of the invention may have a weight of from at least 2 grams and less than 15 grams, preferably from at least 3 grams and less than 12 grams, more preferably, at least 4 grams and less than 10 grams.

Preferably, when being dry, the bouillon cube is a cube that upon dilution in an aqueous solution results in a bouillon, a soup, a sauce, a jus, or a gravy.

The invention further relates to a ready-to-eat food composition comprising said bouillon cube according to the invention. The term "comprising" is interpreted here as that the bouillon cube is dissolved and/or mixed at least partly in a food composition. Hence, the invention preferably relates to a ready-to-eat food composition comprising at least part of a bouillon cube according to the invention, wherein said at least part of the bouillon cube has been mixed with and/or dissolved in a food product. The food product is preferably a liquid food product, preferably an aquous solution, more preferably hot water. The ready-to-eat food composition may preferably be a bouillon, a soup, a sauce or a gravy.

The ready-to-eat food composition may result from the bouillon cube according to the invention. The ready-to-eat food composition should be considered as a food composition that does not need to be diluted further but wherein the ingredients like salt and/or monosodium glutamate are present in a concentration comparable to a freshly prepared, non-diluted, non concentrated food composition. Preferably, therefore, the invention relates to a ready-to-eat food composition according to the invention comprising a total amount of Fe²⁺ and/or Fe³⁺ taken together of from at least 5x10⁻⁴ %wt., preferably from at least 2x10⁻³ %wt. and less than 5x10⁻² %wt., preferably less than 2x10⁻² %wt. based on the weight of the ready-to-eat food composition. This amount refers to the amount of iron, i.e. Fe²⁺ and/or Fe³⁺ taken together. The amount of the actual iron compound may differ from this amount.

Preferably, the ready-to-eat food composition comprises from at least 5x10⁻³ %wt. to less than 1x10⁻² %wt. ferric sodium EDTA based on the weight of the ready-to-eat food composition.

The ready-to-eat food product may be prepared by mixing at least part of the bouillon cube of the invention with or dissolving it in a food product, preferably a liquid food product, preferably with an aqueous solution, preferably with hot water.

In a second aspect, the present invention relates to a process to prepare a bouillon cube according to the invention, comprising, based on the weight of the bouillon cube:
- at least 30%wt. and less than 70 %wt. of NaCl,
- at least 10%wt. and less than 45 %wt. of monosodium glutamate,
further comprising at least one iron compound of the group of ferric sodium EDTA, reduced iron, ferrous lactate, ferric citrate, ferric pyrophosphate, ferrous sulphate monohydrate, ferric ammonium citrate brown in an amount to provide in the bouillon cube a total amount of Fe²⁺ and/or Fe³⁺ taken together of from at least 0.01 %wt. and less than 2.1 %wt, preferably from at least 0.025 %wt and less than 1.6 %wt, more preferably, from at least 0.05 %wt and less than 1 %wt, based on the weight of the bouillon cube, the process comprising the following steps:
a) preparing a mixture comprising:
   - at least 30%wt. and less than 70 %wt. of NaCl,
   - at least 10%wt. and less than 45 %wt. of monosodium glutamate
   - at least one iron compound of the group of ferric sodium EDTA, reduced iron, ferrous lactate, ferric citrate, ferric pyrophosphate, ferrous sulphate monohydrate, ferric ammonium citrate brown,
b) shaping the mixture resulting from step a).

Preferably, the at least one iron compound as added in step a) of the process comprises ferric sodium EDTA in an amount of from at least 0.1 wt% and less than 20 %wt. Preferably, the amount of ferric sodium EDTA is from at least 0.25 %wt. and less than 16 %wt, more preferably, from at least 0.5 %wt and less than 6.5 %wt, as based on the weight of the bouillon cube.

The preparation of the mixture as mentioned in step a) may be provided by means as known by the person skilled in the art. Shaping is preferably carried out by pressing, such as e.g. tabletting, or by extrusion.

The invention will be illustrated by the following, nonlimiting examples.

### Examples

A basic bouillon mix formulation, as detailed in Table 1, was prepared using different iron compounds, as specified in Table 2.

**Table 1: basic bouillon mix formulation**

| Ingredient | Amount (%wt.) |
|---|---|
| Iron compound (see Table 2) | 0.8 (0.105 %wt. iron) |
| Salt | 54.6 |
| Monosodium glutamate | 12.0 |
| Starch | 12.0 |
| Fat | 10.0 |
| Sugar | 5.0 |
| Water | 1.0 |
| Colourants/flavours/spices | 4.6 |
| Total | 100 |

**Table 2: Iron compounds**

| |
|---|
| Ferric sodium EDTA |
| Ferrous sulphate ET (non-encapsulated) |
| Ferrous sulphate SE (encapsulated) |
| Ferrous sulphate monohydrate 65% CD (micro-encapsulated) |
| Ferrous fumarate, ca. 5 micron |
| Ferric ammonium citrate, brown |
| Ferric citrate |
| Ferric pyrophosphate |
| Ferrous lactate |
| Reduced iron |

All crystalline ingredients (e.g. salt, monosodium glutamate. sugar) were added into a Cameron blender and mixed at low speed for 60 seconds. A third of the water was added and mixed at low speed for another 60 seconds. All fine powders (e.g. colourants, flavourants, but not the starch) and each iron compound (table 2) were added at this point and mixed for an additional 60 seconds at low speed. The fat and emulsifier were combined and heated to 60-70 °C and then added into the mixer. The total mixture was further mixed at high speed for 30 seconds. The remaining two thirds of water were added into the mixer and mixed for thirty seconds at high speed. Lastly the starch was added and mixed for 60 seconds at low speed. This homogenous bouillon mixture was then packaged into polyethylene bags in 4g portions.

The resulting mixture may be shaped by a conventional tabletting device, e.g. from Bonals^{™}. After pressing, tablets may be wrapped and packaged.

### Colour test

To evaluate the colour, the 4g bouillon mixture was dissolved in 200 ml water in a beaker and mixed to provide a respective bouillon solution. This resulted in a concentration of 0.016 wt% of the iron compound. As control samples, a bouillon mixture which was coloured with caramel and as a second control a bouillon mixture which did contain neither any iron compound nor caramel was used. The bouillon mixture samples were presented in randomly coded beakers to a test panel of 6 persons. Dissolved bouillon mixtures were assessed for colour. Results are indicated in table 3.

From the test it becomes clear that the bouillon mixtures comprising ferric sodium EDTA, Ferric citrate or Ferric pyrophosphate, showed a colour comparable to the control without any iron compound or caramel. Bouillon mixtures containing ferrous sulphate monohydrate 65% CD (micro encapsulated), ferric ammonium citrate, brown, ferrous lactate, or reduced iron showed acceptable colours which were slightly darker than the control without iron and caramel.

### Organoleptic test

The bouillon mixtures comprising iron compounds were evaluated for organoleptic properties. Samples were tasted every 2 weeks during 24 weeks. Results have been indicated in table 3, on a scale of 1-5. Ferric sodium EDTA proved to be the most organoleptically stable compound, and tasted comparable to the control sample without any iron compound, during the complete 24 week test period. No diminishing of flavour was observed and a surprisingly nice beef flavour was present. No flavour maskants were added to the samples.
Ferric ammonium citrate brown and ferric pyrophosphate showed some diminishing of taste, which became milder as the 24 week trial progressed.
The samples fortified with Ferric Citrate, Ferrous lactate and Reduced Iron had a slightly diminished taste, upon formulation and became milder as the 24 week trial progressed and were considered borderline acceptable. The taste was worse than that of ferric ammonium citrate and ferric pyrophosphate fortified bouillon. The comparison samples fortified with ferrous sulphate SE (encapsulated), ferrous sulphate ET and ferrous sulphate monohydrate 65% CD (microencapsulated) had a moderately affected taste upon formulation which became milder as the 24 week trial progressed; with ferrous sulphate ET imparting the strongest affected taste of all three sulphates, SE being milder and monohydrate being the mildest. These three were considered unacceptable. The comparison sample fortified with ferrous fumarate ca. 5 micron had a strong affected taste upon formulation which became milder as the 24 week trial progressed and was considered unacceptable. The taste of the non-fortified controls was not, as expected, diminished during the 24 week trial.

**Table 3: Colour and taste assessment of bouillon solutions comprising an iron compound. Score is indicated on a range of 1-5 for colour (1 comparable to control, pale yellow; 2 slightly darker yellow; 3 orange/yellow; 4 dark orange/yellow; 5 dark brown) and for taste (1 comparable to iron-free control, beefy notes; 2 very slightly diminished, beefy notes; 3 slightly diminished, beefy notes; 4 moderately affected; 5 strongly affected.**

| Additive in bouillon mixture | colour | Taste |
|---|---|---|
| Caramel, no iron compound (control) | 5 | 1 |
| No caramel, no iron compound (control) | 1 | 1 |
| Ferric sodium EDTA | 1 | 1 |
| Ferrous sulphate ET (comparative example) | 3 | 4 |
| Ferrous sulphate SE (comparative example) | 3 | 4 |
| Ferrous sulphate monohydrate 65% CD | 2 | 4 |
| Ferrous fumarate, ca. 5 micron (comparative example) | 4 | 5 |
| Ferric ammonium citrate, brown | 2 | 2 |
| Ferric citrate | 1 | 3 |
| Ferric pyrophosphate | 1 | 2 |
| Ferrous lactate | 2 | 3 |
| Reduced iron | 1.5 | 3 |

## Claims

1. Bouillon cube comprising, based on the weight of the bouillon cube:
- at least 30%wt. and less than 70 %wt. of NaCl,
- at least 10%wt. and less than 45 %wt. of monosodium glutamate
**characterised in that** said bouillon cube further comprises at least one iron compound of the group of
- ferric sodium EDTA,
- reduced iron,
- ferrous lactate,
- ferric citrate,
- ferric pyrophosphate,
- ferrous sulphate monohydrate,
- ferric ammonium citrate brown,
in such an amount that the bouillon cube comprises an amount of Fe²⁺ and/or Fe³⁺ taken together of from at least 0.01 %wt and less than 2.1 %wt, preferably from at least 0.025 %wt and less than 1.6 %wt, more preferably, from at least 0.05 %wt and less than 1 %wt, based on the weight of the bouillon cube.

2. Bouillon cube according to claim 1, wherein the at least one iron compound is ferric sodium EDTA.

3. Bouillon cube according to claim 2, wherein the amount of ferric sodium EDTA is from 0.1 %wt. and less than 20 %wt., based on the weight of the bouillon cube.

4. Bouillon cube according anyone of claims 1 to 3, wherein the bouillon cube is a dry bouillon cube having a water activity of lower than 0.65.

5. Bouillon cube according to any one of 1 to 4, wherein the bouillon cube further comprises starch in an amount of from at least 2 %wt and less than 20 %wt.

6. Bouillon cube according anyone of claims 1 to 5, wherein the bouillon cube has the form of a gel, having a water content of from at least 20%wt and less than 80%wt.

7. Ready-to-eat food composition comprising a bouillon cube according to any one of claims 1 to 6, wherein at least part of said bouillon cube has been mixed with and/or dissolved in a food product, wherein the Ready-to-eat food composition comprises a total amount of Fe²⁺ and/or Fe³⁺ of from at least 5x10⁻⁴ %wt. and less than 5x10⁻² %wt, based on the weight of the ready-to-eat food composition.

8. Ready-to-eat food composition according to claim 7, wherein the ready-to-eat food composition is a bouillon, a soup, a sauce or a gravy.

9. Ready-to-eat food composition according to any one of claims 7 or 8, comprises from at least 5x10⁻³ %wt. to less than 1x10⁻² %wt. ferric sodium EDTA based on the weight of the ready-to-eat food composition.

10. Process of preparing a ready-to-eat food composition according to anyone of claims 7 to 9, comprising the step of mixing at least part of the bouillon cube according to any one of claims 1 to 6 with or dissolving it in a food product.

11. Process to prepare a bouillon cube according to the invention, comprising, based on the weight of the bouillon cube:
- at least 30%wt. and less than 70 %wt. of NaCl,
- at least 10%wt. and less than 45 %wt. of monosodium glutamate, further comprising
- at least one iron compound of the group of ferric sodium EDTA, reduced iron, ferrous lactate, ferric citrate, ferric pyrophosphate, ferrous sulphate monohydrate, ferric ammonium citrate brown in an amount such that the bouillon cube comprises an amount of Fe²⁺ and/or Fe³⁺ taken together of from at least 0.01 %wt. and less than 2.1 %wt, preferably from at least 0.025 %wt and less than 1.6 %wt, more preferably, from at least 0.05 %wt and less than 1 %wt, based on the weight of the bouillon cube, the process comprising the following steps:
a) preparing a mixture comprising at least:
- at least 30 %wt, and less than 70 %wt. of NaCl,
- at least 10%wt. and less than 45 %wt. of monosodium glutamate,
- at least one iron compound of the group of ferric sodium EDTA, reduced iron, ferrous lactate, ferric citrate, ferric pyrophosphate, ferrous sulphate monohydrate, ferric ammonium citrate brown,
b) shaping the mixture resulting from step a).

## Patentansprüche

1. Bouillonwürfel, umfassend, bezogen auf das Gewicht des Bouillonwürfels:
- wenigstens 30 Gew.-% und weniger als 70 Gew.-% NaCl,
- wenigstens 10 Gew.-% und weniger als 45 Gew.-% Mononatriumglutamat, **dadurch gekennzeichnet, dass** der Bouillonwürfel außerdem wenigstens eine Eisenverbindung aus der Gruppe aus
- Eisen(III)-natrium-EDTA,
- reduziertem Eisen,
- Eisen(II)-lactat,
- Eisen(III)-citrat,
- Eisen(III)-pyrophosphat,
- Eisen(II)-sulfat-Monohydrat,
- braunem Eisen(III)-ammoniumcitrat
in einer solchen Menge umfasst, dass der Bouillonwürfel eine Menge an Fe²⁺ und/ oder Fe³⁺ zusammengenommen von wenigstens 0,01 Gew.-% und weniger als 2,1 Gew.-%, vorzugsweise von wenigstens 0,025 Gew.-% und weniger als 1,6 Gew.-%, bevorzugter von wenigstens 0,05 Gew.-% und weniger als 1 Gew.-%, bezogen auf das Gewicht des Bouillonwürfels, umfasst.

2. Bouillonwürfel gemäß Anspruch 1, wobei die wenigstens eine Eisenverbindung Eisen(III)-natrium-EDTA ist.

3. Bouillonwürfel gemäß Anspruch 2, wobei die Menge an Eisen(III)-natrium-EDTA von 0,1 Gew.-% und weniger als 20 Gew.-%, bezogen auf das Gewicht des Bouillonwürfels, ist.

4. Bouillonwürfel gemäß einem der Ansprüche 1 bis 3, wobei der Bouillonwürfel ein trockener Bouillonwürfel ist, der eine Wasseraktivität von niedriger als 0,65 hat.

5. Bouillonwürfel gemäß einem der Ansprüche 1 bis 4, wobei der Bouillonwürfel außerdem Stärke in einer Menge von wenigstens 2 Gew.-% und weniger als 20 Gew.-% umfasst.

6. Bouillonwürfel gemäß einem der Ansprüche 1 bis 5, wobei der Bouillonwürfel die Form eines Gels hat, das einen Wassergehalt von wenigstens 20 Gew.-% und weniger als 80 Gew.-% hat.

7. Verzehrfertige Nahrungsmittelzusammensetzung, die einen Bouillonwürfel gemäß einem der Ansprüche 1 bis 6 umfasst, wobei wenigstens ein Teil des Bouillonwürfels mit einem Nahrungsmittelprodukt vermischt und/oder in einem Nahrungsmittelprodukt gelöst wurde, wobei die verzehrfertige Nahrungsmittelzusammensetzung eine Gesamtmenge an Fe²⁺ und/oder Fe³⁺ von wenigstens 5 x 10⁻⁴ Gew.-% und weniger als 5 x 10⁻² Gew.-%, bezogen auf das Gewicht der verzehrfertigen Nahrungsmittelzusammensetzung, umfasst.

8. Verzehrfertige Nahrungsmittelzusammensetzung gemäß Anspruch 7, wobei die verzehrfertige Nahrungsmittelzusammensetzung eine Bouillon, eine Suppe, eine Soße oder ein Bratensaft ist.

9. Verzehrfertige Nahrungsmittelzusammensetzung gemäß einem der Ansprüche 7 oder 8, die von wenigstens 5 x 10⁻³ Gew.-% bis weniger als 1 x 10⁻² Gew.-% Eisen(III)-natrium-EDTA, bezogen auf das Gewicht der verzehrfertigen Nahrungsmittelzusammensetzung, umfasst.

10. Verfahren zur Herstellung einer verzehrfertigen Nahrungsmittelzusammensetzung gemäß einem der Ansprüche 7 bis 9, das den Schritt des Vermischens oder Lösens wenigstens eines Teils des Bouillonwürfels gemäß einem der Ansprüche 1 bis 6 mit oder in einem Nahrungsmittelprodukt umfasst.

11. Verfahren zur Herstellung eines Bouillonwürfels gemäß der Erfindung, umfassend, bezogen auf das Gewicht des Bouillonwürfels:
- wenigstens 30 Gew.-% und weniger als 70 Gew.-% NaCl,
- wenigstens 10 Gew.-% und weniger als 45 Gew.-% Mononatriumglutamat, außerdem umfassend:
- wenigstens eine Eisenverbindung aus der Gruppe aus Eisen(III)-natrium-EDTA, reduziertem Eisen, Eisen(II)-lactat, Eisen(III)-citrat, Eisen(III)-pyrophosphat, Eisen(II)-sulfat-Monohydrat, braunem Eisen(III)-ammoniumcitrat in einer solchen Menge, dass der Bouillonwürfel eine Menge an Fe²⁺ und/oder Fe³⁺ zusammen genommen von wenigstens 0,01 Gew.-% und weniger als 2,1 Gew.-%, vorzugsweise von wenigstens 0,025 Gew.-% und weniger als 1,6 Gew.-%, bevorzugter von wenigstens 0,05 Gew.-% und weniger als 1 Gew.-%, bezogen auf das Gewicht des Bouillonwürfels, umfasst, wobei das Verfahren die folgenden Schritte umfasst:
a) Herstellen eines Gemisches, das wenigstens:
- 30 Gew.-% und weniger als 70 Gew.-% NaCl,
- wenigstens 10 Gew.-% und weniger als 45 Gew.-% Mononatriumglutamat,
- wenigstens eine Eisenverbindung aus der Gruppe aus Eisen(III)-natrium-EDTA, reduziertem Eisen, Eisen(II)-lactat, Eisen(III)-citrat, Eisen(III)-pyrophosphat, Eisen(II)-sulfat-Mono hydrat, braunem Eisen(III)-Ammoniumcitrat umfasst,
b) Formen des aus Schritt a) resultierenden Gemisches.

## Revendications

1. Bouillon cube comprenant, sur la base du poids du bouillon cube :
- au moins 30 % en poids et moins de 70 % en poids de NaCl,
- au moins 10 % en poids et moins de 45 % en poids de glutamate monosodique,
**caractérisé en ce que** ledit bouillon cube comprend en outre au moins un composé de fer appartenant au groupe comprenant
- l'EDTA sodium ferrique,
- le fer réduit,
- le lactate ferreux,
- le citrate ferrique,
- le pyrophosphate ferrique,
- le sulfate ferreux monohydraté,
- le citrate d'ammonium ferrique - marron,
en une quantité telle que le bouillon cube comprend une quantité de Fe²⁺ et/ou Fe³⁺ confondus d'au moins 0,01 % en poids et inférieure à 2,1 % en poids, de préférence d'au moins 0,025 % en poids et inférieure à 1,6 % en poids, plus préférablement, d'au moins 0,05 % en poids et inférieure à 1 % en poids, sur la base du poids du bouillon cube.

2. Bouillon cube selon la revendication 1, dans lequel ledit au moins composé de fer est l'EDTA de sodium ferrique.

3. Bouillon cube selon la revendication 2, dans lequel la quantité d'EDTA sodium ferrique est de 0,1 % en poids et inférieure à 20 % en poids, sur la base du poids du bouillon cube.

4. Bouillon cube selon l'une quelconque des revendications 1 à 3, dans lequel le bouillon cube est un bouillon cube sec ayant une activité d'eau inférieure à 0,65.

5. Bouillon cube selon l'une quelconque des revendications 1 à 4, dans lequel le bouillon cube comprend en outre de l'amidon en une quantité d'au moins 2 % en poids et inférieure à 20 % en poids.

6. Bouillon cube selon l'une quelconque des revendications 1 à 5, dans lequel le bouillon cube est sous la forme d'un gel ayant une teneur en eau d'au moins 20 % en poids et inférieure à 80 % en poids.

7. Composition alimentaire prête à consommer comprenant un bouillon cube selon l'une quelconque des revendications 1 à 6, dans laquelle au moins une partie dudit bouillon cube a été incorporée par mélange et/ou dissoute dans un produit alimentaire, la composition alimentaire prête à consommer comprenant une quantité totale de Fe²⁺ et/ou Fe³⁺ d'au moins 5x10⁻⁴ % en poids et inférieure à 5x10⁻² % en poids, sur la base du poids de la composition alimentaire prête à consommer.

8. Composition alimentaire prête à consommer selon la revendication 7, dans laquelle la composition alimentaire prête à consommer est un bouillon, une soupe, une sauce ou un jus de viande.

9. Composition alimentaire prête à consommer selon l'une quelconque des revendications 7 ou 8 comprenant d'au moins 5x10⁻³ % en poids à moins de 1x10⁻² % en poids d'EDTA sodium ferrique sur la base du poids de la composition alimentaire prête à consommer.

10. Procédé de préparation d'une composition alimentaire prête à consommer selon l'une quelconque des revendications 7 à 9, comprenant l'étape d'incorporation par mélange d'au moins une partie du bouillon cube selon l'une quelconque des revendications 1 à 6 ou sa dissolution dans un produit alimentaire.

11. Procédé de préparation d'un bouillon cube selon l'invention, comprenant, sur la base du poids du bouillon cube :
- au moins 30 % en poids et moins de 70 % en poids de NaCl,
- au moins 10 % en poids et moins de 45 % en poids de glutamate monosodique, comprenant en outre
- au moins un composé de fer appartenant au groupe comprenant l'EDTA sodium ferrique, le fer réduit, le lactate ferreux, le citrate ferrique, le pyrophosphate ferrique, le sulfate ferreux monohydraté, le citrate d'ammonium ferrique - marron, en une quantité telle que le bouillon cube comprend une quantité de Fe²⁺ et/ou Fe³⁺ confondus d'au moins 0,01 % en poids et inférieure à 2,1 % en poids, de préférence d'au moins 0,025 % en poids et inférieure à 1,6 % en poids, plus préférablement, d'au moins 0,05 % en poids et inférieure à 1 % en poids, sur la base du poids du bouillon cube, le procédé comprenant les étapes suivantes :
a) la préparation d'un mélange comprenant :
- au moins 30 % en poids et moins de 70 % en poids de NaCl,
- au moins 10 % en poids et moins de 45 % en poids de glutamate monosodique,
- au moins un composé de fer appartenant au groupe comprenant l'EDTA sodium ferrique, le fer réduit, le lactate ferreux, le citrate ferrique, le pyrophosphate ferrique, le sulfate ferreux monohydraté, le citrate d'ammonium ferrique - marron,
b) la mise en forme du mélange obtenu à l'étape a).
